(19) Europäisches Patentamt
European Patent Office
Office européen des brevets

(11) **EP 4 626 087 A1**

(12) **EUROPEAN PATENT APPLICATION**
published in accordance with Art. 153(4) EPC

(43) Date of publication:
**01.10.2025 Bulletin 2025/40**

(21) Application number: **23915282.0**

(22) Date of filing: **10.01.2023**

(51) International Patent Classification (IPC):
**H04W 52/02** (2009.01)   **H01Q 25/04** (2006.01)

(52) Cooperative Patent Classification (CPC):
**H01Q 25/04; H04W 52/02;** Y02D 30/70

(86) International application number:
**PCT/CN2023/071502**

(87) International publication number:
**WO 2024/148504 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **FANG, Qiang**
  **Shenzhen, Guangdong 518129 (CN)**
• **CHENG, Sifan**
  **Shenzhen, Guangdong 518129 (CN)**
• **XU, Weimin**
  **Shenzhen, Guangdong 518129 (CN)**

(74) Representative: **Maiwald GmbH
Engineering
Elisenhof
Elisenstrasse 3
80335 München (DE)**

(54) **METHOD AND APPARATUS FOR TURNING OFF PHYSICAL ANTENNA**

(57)   This application provides a method for switching off a physical antenna, and an apparatus, to improve energy - saving effect of a network device while experience of terminal devices (users) is ensured and a coverage loss of the network device is avoided. The method includes: A BBH of a network device obtains received power information that is of terminal devices in a plurality of grids in a first time period, where the plurality of grids are included within coverage of the network device; the BBH sends, to a BBL of the network device through an eCPRI, the received power information that is of the terminal devices in the plurality of grids in the first time period, a first parameter, and a second parameter, where the first parameter is an allowable error of a total received power of all the terminal devices in the plurality of grids, and the second parameter is an energy-saving policy control parameter; and the BBL determines a switch-off policy that is for a plurality of physical antennas of the network device in a second time period based on the received power information of the terminal devices in the plurality of grids in the first time period, the first parameter, and the second parameter.

800

A BBH obtains received power information that is of terminal devices in a plurality of grids in a first time period, where the plurality of grids are included within coverage of a network device — 810

The BBH sends, to a BBL through an eCPRI, the received power information that is of the terminal devices in the plurality of grids in the first time period, a first parameter, and a second parameter, where the first parameter is an allowable error of a total received power of all the terminal devices in the plurality of grids, and the second parameter is an energy-saving policy control parameter — 820

The BBL determines a switch-off policy that is for a plurality of physical antennas of the network device in a second time period based on the received power information of the terminal devices in the plurality of grids in the first time period, the first parameter, and the second parameter — 830

FIG. 8

**Description**

**TECHNICAL FIELD**

This application relates to the field of communication, and more specifically, to a method for switching off a physical antenna, and an apparatus.

**BACKGROUND**

In 4G, a CPRI interface is used to connect a baseband unit (building baseband unit, BBU) and a remote radio unit (remote radio unit, RRU) on a base station side. In 5G, with significant increases in a bandwidth and a quantity of antennas, an amount of data communicated between a BBU and an RRU through a fronthaul interface increases by 80 times. To address the sharp increase in the amount of data over the fronthaul interface, 5G technologies split the BBU into two parts: a baseband higher (baseband higher, BBH) and a baseband lower (baseband lower, BBL). The BBH is deployed at a conventional BBU location, for example, in an equipment room. The BBL is deployed at a location close to an antenna. For example, the BBL, the RRU, and the antenna are integrated to form an active antenna unit (active antenna unit, AAU), and an enhanced common public radio interface (enhanced common public radio interface, eCPRI) is used to connect the BBH and the AAU on a base station side.

Energy consumption of a 5G base station is concentrated in the AAU. With an increase in a load rate, energy consumption of the AAU increases greatly. Therefore, the AAU is the main focus of energy saving for the base station. Currently, most energy-saving methods share a feature that as an initiator of energy saving, the BBU/BBH statically/-dynamically indicates, based on an input such as a traffic load rate, the AAU to perform different forms of energy saving, with energy-saving effect manifested at the AAU end.

Common channel shutdown methods include a static channel shutdown method and a dynamic channel shutdown method. In the static channel shutdown method, due to fixed shutdown of half of channels, a data throughput of the base station is fixedly reduced, and coverage of the base station is reduced, leading to a coverage loss. In addition, due to fixed shutdown, shutdown manners are limited, resulting in a low proportion of effective energy saving, and limited energy-saving effect. In the dynamic channel shutdown method, the BBH determines, by using an energy-saving algorithm, a proper channel to be shut down. However, this places a relatively high requirement on performance of the energy-saving algorithm, and different energy-saving algorithms lead to relatively large differences in energy-saving effect and channel shutdown accuracy.

**SUMMARY**

This application provides a method for switching off a physical antenna, and an apparatus, to improve energy-saving effect of a network device while experience of terminal devices (users) is ensured and a coverage loss of the network device is avoided.

According to a first aspect, a method for switching off a physical antenna is provided, where the method may be performed by a chip or a chip system on a network device side, a network device includes a baseband higher BBH and a baseband lower BBL, and the method includes: The BBH obtains received power information that is of terminal devices in a plurality of grids in a first time period, where the plurality of grids are included within coverage of the network device; the BBH sends, to the BBL through an enhanced common public radio interface eCPRI, the received power information that is of the terminal devices in the plurality of grids in the first time period, a first parameter, and a second parameter, where the first parameter is an allowable error of a total received power of all the terminal devices in the plurality of grids, and the second parameter is an energy-saving policy control parameter; and the BBL determines a switch-off policy that is for a plurality of physical antennas of the network device in a second time period based on the received power information of the terminal devices in the plurality of grids in the first time period, the first parameter, and the second parameter.

Based on the foregoing technical solution, the BBH determines the switch-off policy that is for the plurality of physical antennas of the network device in the second time period based on the received power information of the terminal devices in the plurality of grids in the first time period, the first parameter, and the second parameter, so that off states or on states of the plurality of physical antennas of the network device can be dynamically adjusted. The technical solution in this embodiment of this application can improve channel shutdown accuracy, so that energy-saving effect of the network device can be improved while experience of the terminal devices (users) is ensured and a coverage loss of the network device is avoided.

With reference to the first aspect, in some implementations of the first aspect, that the BBH obtains the received power information that is of the terminal devices in the plurality of grids in the first time period includes: A radio resource control RRC layer receives the received power information that is in the first time period from the terminal devices, where the network device includes the RRC layer; the RRC layer sends the received power information that is of the terminal devices in the first time period to the BBH; and the BBH receives the received power information that is of the terminal devices in the first time period from the RRC layer.

With reference to the first aspect, in some implementations of the first aspect, that the BBL determines the switch-off policy that is for the plurality of physical antennas of the network device in the second time period based on the received power information of the terminal devices in the plurality of grids in the first time period, the first parameter, and the second parameter includes: The BBL determines the switch-off policy that is for the plurality of physical antennas of the network device in the second time period based on a total load power of the network device in the second time period, received power information of the terminal devices in the plurality of grids in the second time period, the received power information of the terminal devices in the plurality of grids in the first time period, the first parameter, and the second parameter.

With reference to the first aspect, in some implementations of the first aspect, the method further includes: The BBL switches off or on, in the second time period, the plurality of physical antennas of the network device according to the switch-off policy.

According to a second aspect, a communication apparatus is provided, where the apparatus includes a baseband higher BBH and a baseband lower BBL; the BBH is configured to obtain received power information that is of terminal devices in a plurality of grids in a first time period, where the plurality of grids are included within coverage of the apparatus; the BBH is further configured to send, to the BBL through an enhanced common public radio interface eCPRI, the received power information that is of the terminal devices in the plurality of grids in the first time period, a first parameter, and a second parameter, where the first parameter is an allowable error of a total received power of all the terminal devices in the plurality of grids, and the second parameter is an energy-saving policy control parameter; and the BBL is configured to determine a switch-off policy that is for a plurality of physical antennas of the apparatus in a second time period based on the received power information of the terminal devices in the plurality of grids in the first time period, the first parameter, and the second parameter.

With reference to the second aspect, in some implementations of the second aspect, the apparatus further includes a radio resource control RRC layer; the RRC layer is configured to receive the received power information that is in the first time period from the terminal devices; the RRC layer is further configured to send the received power information that is of the terminal devices in the first time period to the BBH; and the BBH is specifically configured to receive the received power information that is of the terminal devices in the first time period from the RRC layer.

With reference to the second aspect, in some implementations of the second aspect, the BBL is specifically configured to determine the switch-off policy that is for the plurality of physical antennas of the apparatus in the second time period based on a total load power of the apparatus in the second time period, received power information of the terminal devices in the plurality of grids in the second time period, the received power information of the terminal devices in the plurality of grids in the first time period, the first parameter, and the second parameter.

With reference to the second aspect, in some implementations of the second aspect, the BBL is further configured to switch off or on, in the second time period, the plurality of physical antennas of the apparatus according to the switch-off policy.

According to a third aspect, a communication apparatus is provided, including: a transceiver unit, configured to obtain received power information that is of terminal devices in a plurality of grids in a first time period, where the plurality of grids are included within coverage of the apparatus; and a processing unit, configured to determine a switch-off policy that is for a plurality of physical antennas of the apparatus in a second time period based on the received power information of the terminal devices in the plurality of grids in the first time period, the first parameter, and the second parameter, where the first parameter is an allowable error of a total received power of all the terminal devices in the plurality of grids, and the second parameter is an energy-saving policy control parameter.

With reference to the third aspect, in some implementations of the third aspect, the transceiver unit is specifically configured to receive the received power information that is of the terminal devices in the first time period.

With reference to the third aspect, in some implementations of the third aspect, the processing unit is specifically configured to determine the switch-off policy that is for the plurality of physical antennas of the apparatus in the second time period based on a total load power of the apparatus in the second time period, received power information of the terminal devices in the plurality of grids in the second time period, the received power information of the terminal devices in the plurality of grids in the first time period, the first parameter, and the second parameter.

With reference to the third aspect, in some implementations of the third aspect, the processing unit is further configured to switch off or on, in the second time period, the plurality of physical antennas of the apparatus according to the switch-off policy.

According to a fourth aspect, a communication device is provided, including a processor and a memory, where the memory is configured to store a computer program, the processor is configured to execute the computer program stored in the memory, to enable the communication apparatus to perform the method according to the first aspect or any one of the possible implementations of the first aspect.

According to a fifth aspect, a communication system is provided, including the network terminal and the terminal devices in the method according to the first aspect.

According to a sixth aspect, a computer-readable storage medium is provided, where the computer-readable medium stores a computer program, and when the computer program is run on a computer or a processor, the computer or the processor is enabled to perform the method according to the first aspect or any one of the possible implementations of the first aspect.

According to a seventh aspect, a computer program product is provided, including a computer program, where when the computer program is run by a computer, the method according to the first aspect or any one of the possible implementations of the first aspect is implemented.

The solutions provided in the second aspect to the seventh aspect are used to implement or cooperatively implement the method provided in the first aspect, and therefore can achieve beneficial effects the same as or corresponding to those in the first aspect. Details are not described herein again.

## BRIEF DESCRIPTION OF DRAWINGS

FIG. 1 is a diagram of an architecture of a system to which embodiments of this application are applicable;
FIG. 2 is a diagram of a fronthaul interface;
FIG. 3 is a diagram of a static channel shutdown solution;
FIG. 4 is a diagram of left/right channel shutdown;
FIG. 5 is a diagram of odd/even-numbered channel shutdown;
FIG. 6 is a diagram of a dynamic channel shutdown solution;
FIG. 7 is a diagram of dynamic channel shutdown;
FIG. 8 is a schematic flowchart of a method for switching off a physical antenna according to an embodiment of this application;
FIG. 9 is a schematic interaction flowchart of an example of a method for switching off a physical antenna according to an embodiment of this application;
FIG. 10 is a block diagram of a communication apparatus according to an embodiment of this application;
FIG. 11 is a block diagram of another communication apparatus according to an embodiment of this application; and
FIG. 12 is a block diagram of a communication device according to an embodiment of this application.

## DESCRIPTION OF EMBODIMENTS

The following describes technical solutions of this application with reference to the accompanying drawings.

Embodiments of this application may be applied to various communication systems, for example, a wireless local area network (wireless local area network, WLAN) system, a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA 2000) system, a time division synchronous code division multiple access (time division synchronous code division multiple access, TD-SCDMA) system, a long term evolution (long term evolution, LTE) system, a satellite communication system, a sidelink (sidelink, SL) system, a 4th generation (fourth generation, 4G) system, a 5th generation (5th generation, 5G) system, or a new communication system emerging in the future. The communication system includes communication devices, and wireless communication may be performed between the communication devices on an air interface resource. The communication devices may include a network device and a terminal device, and the network device may also be referred to as a base station device. The air interface resource may include at least one of a time domain resource, a frequency domain resource, a code resource, and a spatial resource.

The terminal device in embodiments of this application may include various handheld devices, vehicle-mounted devices, wearable devices, or computing devices that have a wireless communication function, or other processing devices connected to a wireless modem. The terminal may be a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modulator-demodulator (modulator-demodulator, modem), a laptop computer (laptop computer), a machine type communication (machine type communication, MTC) terminal, a wireless terminal in self driving (self driving), or the like. The user equipment includes vehicle user equipment. With emergence of internet of things (internet of things, IoT) technologies, more devices that previously do not have a communication function, for example, but not limited to, a household appliance, a transportation vehicle, a tool device, a service device, and a service facility, start to obtain a wireless communication function by being configured with a wireless communication unit, to access a wireless communication network to accept remote control. Devices of this type have a wireless communication function because the devices are configured with a wireless communication unit.

Therefore, the devices of this type also belong to a scope of wireless communication devices. In addition, the terminal device may also be referred to as a mobile station (mobile station, MS), a mobile device, a mobile terminal, a wireless terminal, a handset (handset), a client, a virtual reality (virtual reality, VR) terminal device, an augmented reality (augmented reality, AR) terminal device, a wireless terminal in industrial control, a wireless terminal in self driving, a wireless terminal in telemedicine, a wireless terminal in smart grid, a wireless terminal in smart city (smart city), a wireless terminal in smart home (smart home), and the like. In embodiments of this application, an apparatus configured to implement a function of the terminal device may be the terminal device, or may be an apparatus that can support the terminal device in implementing the function, for example, a chip system, where the apparatus may be mounted in the terminal device. In embodiments of this application, the chip system may include a chip, or may include a chip and another discrete component.

For example, the network device may be an access network device, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, or home NodeB, HNB), a baseband unit (baseband unit, BBU), a device that performs a base station function in device to device (device to device, D2D), an access point (access point, AP) in a wireless fidelity (wireless fidelity, Wi-Fi) system, a wireless relay node, a wireless backhaul node, a transmission point (transmission point, TP), a transmission-reception point (transmission-reception point, TRP), or the like; or may be a gNB or a transmission point (for example, a TRP or a TP) in new radio (new radio, NR), one antenna panel or a group of antenna panels (including a plurality of antenna panels) of a base station in NR, or a network node that forms a gNB or a transmission point, such as a BBU or a distributed unit (distributed unit, DU); or may be a vehicle-mounted device, a wearable device, or a network device in a 6G network, a network device in a future evolved PLMN network, a network device deployed on a satellite, or the like. This is not limited. In addition, based on areas of provided service coverage, base stations (base stations, BSs) may be classified into macro base stations for providing a macro cell (macro cell), micro base stations for providing a micro cell (pico cell), and femto base stations for providing a femto cell (femto cell), relay stations, access points, and the like. With evolution of wireless communication technologies, a future base station may also use another name.

The network device has abundant product forms. For example, in a product implementation process, a BBU and a radio frequency unit (radio frequency unit, RFU) may be integrated into a same device, and the device is connected to an antenna array through a cable (for example but not limited to, a feeder). The BBU and the RFU may alternatively be disposed separately, are connected to each other through an optical fiber, and communicate with each other by using, for example but not limited to, a common public radio interface (common public radio interface, CPRI) protocol. In this case, the RFU is usually referred to as an RRU, and is connected to the antenna array through a cable. In addition, the RRU may be integrated with the antenna array. For example, this structure is used in an active antenna unit product in a current market.

In addition, the BBU may be further divided into a plurality of parts. For example, the BBU may be further divided into a central unit (central unit, CU) and a distributed unit (distributed unit, DU) based on real-time requirements of processed services. The CU is responsible for processing non-real-time protocols and services, and the DU is responsible for processing physical layer protocols and real-time services. Further, some physical layer functions may be separated from the BBU or the DU and integrated into an AAU.

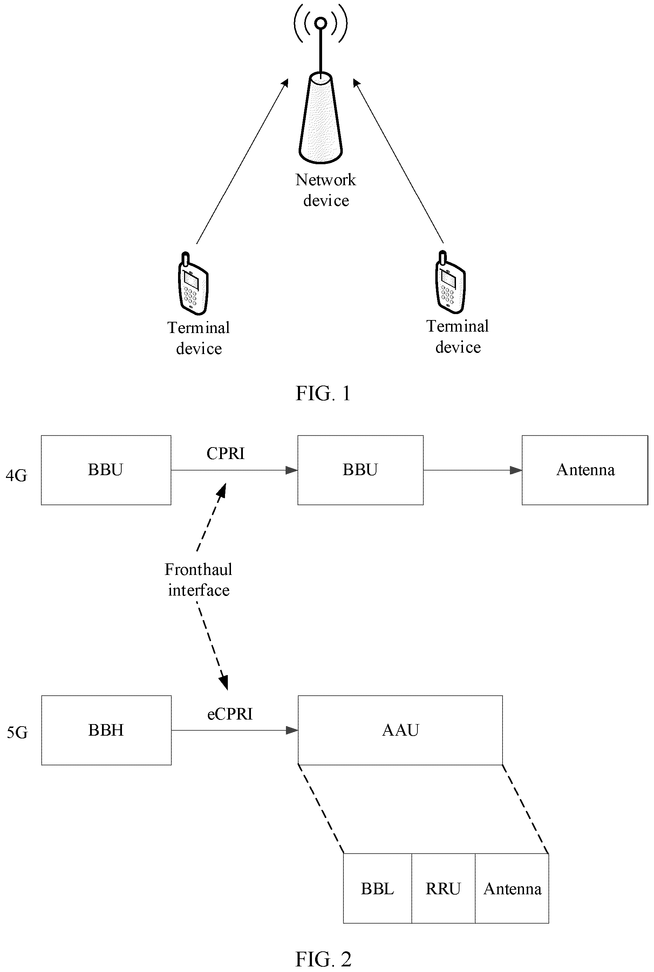

FIG. 1 is a diagram of an architecture of a system to which embodiments of this application are applicable. The system includes a network device and terminal devices. The network device communicates with the terminal devices within coverage of the network device through physical antennas. The network device includes a base station.

To facilitate understanding of embodiments of this application, the following briefly describes technical solutions related to embodiments of this application.

FIG. 2 is a diagram of a fronthaul interface. In 4G, a CPRI interface is used to connect a BBU and an RRU on a base station side. In 5G, with significant increases in a bandwidth and a quantity of antennas, an amount of data communicated between a BBU and an RRU through a fronthaul interface increases by 80 times. To address the sharp increase in the amount of data over the fronthaul interface, 5G introduces various splitting manners, splitting the BBU into two parts: a BBH and a BBL. The BBH is deployed at a conventional BBU location, for example, in an equipment room. The BBL is deployed at a location close to an antenna. For example, the BBL, the RRU, and the antenna are integrated to form an AAU, and an eCPRI interface is used to connect the BBH and the AAU on a base station side. The BBH and BBL are obtained through splitting, to reduce the amount of data over the fronthaul interface. Therefore, the fronthaul interface is an important interface on a radio access network (radio access network, RAN) base station side. The BBH may be considered as a logical function module of the BBU.

Energy consumption of a 5G base station is concentrated in the AAU. With an increase in a load rate, energy consumption of the AAU increases greatly. Therefore, the AAU is the main focus of energy saving for the base station. Currently, most energy-saving methods share a feature that as an initiator of energy saving, the BBU/BBH statically-/dynamically indicates, based on an input such as a traffic load rate, the AAU to perform different forms of energy saving, with energy-saving effect manifested at the AAU end.

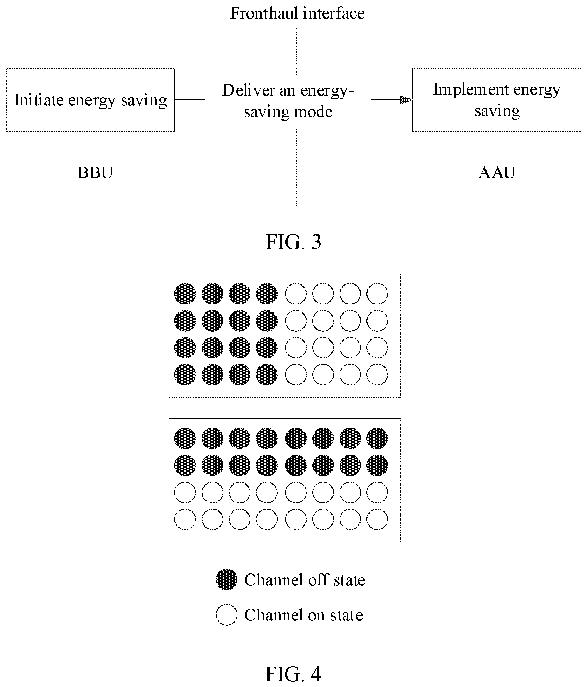

Static channel shutdown is a method that fixedly shuts down some channels to achieve energy-saving effect. Common channels to be statically shut down are relatively fixed and follow specific patterns, for example, left/right channels to be shut down, or odd/even-numbered channels to be shut down. FIG. 3 is a diagram of a static channel shutdown solution.

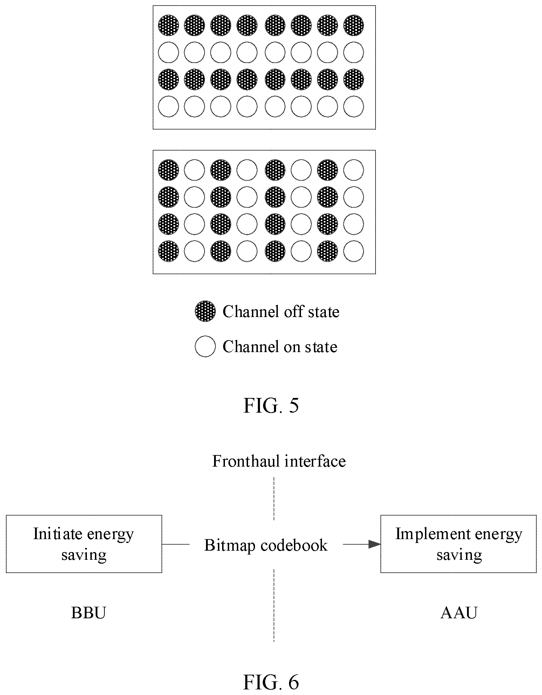

(1) Left/right channel shutdown is fixed shutdown of left channels or right channels. Shutdown indication is at the BBU/BBH end. The BBU/BBH delivers a channel shutdown mode to the AAU through the fronthaul interface based on a scenario. FIG. 4 is a diagram of left/right channel shutdown.
(2) Odd/even-numbered channel shutdown is fixed shutdown of odd-numbered channels or evennumbered channels. The BBU/BBH selects a channel shutdown mode based on a scenario, and delivers the channel shutdown mode to the AAU through the fronthaul interface. FIG. 5 is a diagram of odd/even-numbered channel shutdown.

In static channel shutdown, due to fixed shutdown of half of channels, a data throughput of a base station is fixedly reduced, and coverage of the base station is reduced, leading to a coverage loss. In addition, due to fixed shutdown, shutdown manners are limited, resulting in a low proportion of effective energy saving, and limited energy-saving effect.

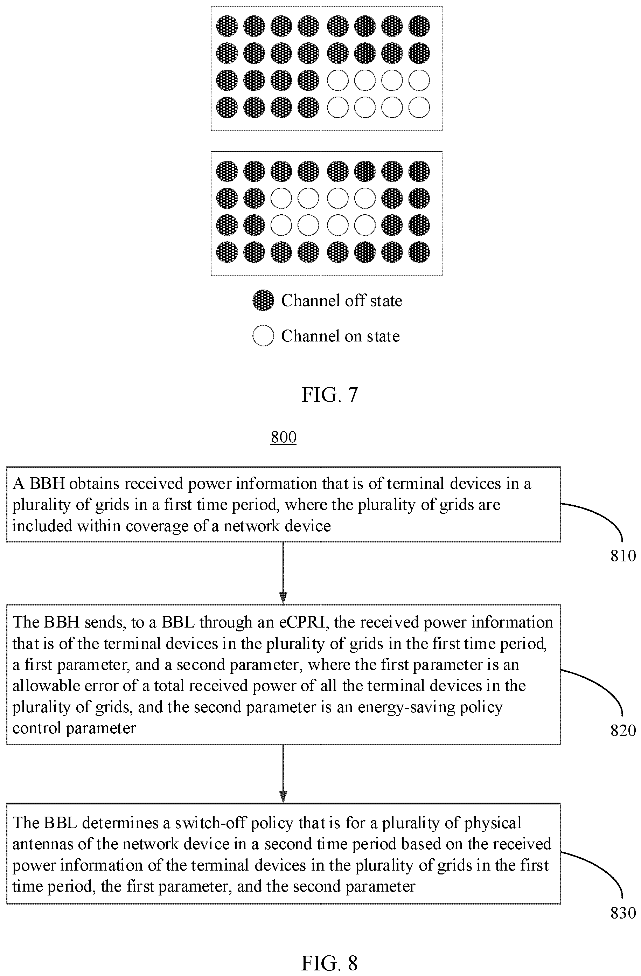

Dynamic channel shutdown is that the BBU/BBH determines, by using an energy-saving algorithm, a proper channel to be shut down, and delivers the to-be-shut-down channel in a form of bitmap (bitmap) codebook to the AAU for dynamic channel shutdown. Computing for channel shutdown is generally guided by measured metrics, and the BBU/BBH delivers the bitmap codebook to the AAU. FIG. 6 is a diagram of a dynamic channel shutdown solution. FIG. 7 is a diagram of dynamic channel shutdown.

However, dynamic channel shutdown places a relatively high requirement on performance of the energy-saving algorithm, and different energy-saving algorithms lead to relatively large differences in energy-saving effect and channel shutdown accuracy.

An embodiment of this application provides a method for switching off a physical antenna, to improve energy-saving effect of a network device while experience of terminal devices (users) is ensured and a coverage loss of the network device is avoided.

FIG. 8 is a schematic flowchart of a method 800 for switching off a physical antenna according to an embodiment of this application. A network device in this embodiment of this application may be a base station, and the network device includes a radio resource control (radio resource control, RRC) layer, a BBH, and a BBL. The network device communicates with terminal devices within coverage of the network device. "Physical antenna" in embodiments of this application may be understood as "radio frequency channel," and "radio frequency channel" may be briefly referred to as "channel".

810: The BBH obtains received power information that is of terminal devices in a plurality of grids in a first time period, where the plurality of grids are included within the coverage of the network device, and the plurality of grids are obtained through division based on geographical locations of the different terminal devices. The first time period may be understood as a collection period of the received power information. That the BBH obtains the received power information that is of the terminal devices in the plurality of grids in the first time period may be understood as that the BBH obtains received power information that is of all the terminal devices in the plurality of grids in the first time period.

Optionally, the terminal devices send the received power information that is in the first time period to the RRC layer of the network device, and correspondingly, the RRC layer of the network device receives the received power information that is in the first time period from the terminal devices. The RRC layer of the network device sends the received power information that is of the terminal devices in the plurality of grids in the first time period to the BBH, and correspondingly, the BBH receives the received power information that is of the terminal devices in the plurality of grids in the first time period from the RRC layer. It should be understood that, all the terminal devices in the plurality of grids separately send received power information that is in the first time period to the RRC layer of the network device, and correspondingly, the RRC layer receives the received power information that is in the first time period from all the terminal devices in the plurality of grids.

For example, the terminal devices may periodically send the received power information to the RRC layer of the network device. A periodicity with which the terminal devices send the received power information may be in hours, minutes, or seconds. A periodicity of the first time period may be in hours, minutes, or seconds. This is not specifically limited in embodiments of this application.

820: The BBH sends, to the BBL through an eCPRI interface, the received power information that is of the terminal devices in the plurality of grids in the first time period, a first parameter, and a second parameter, where the first parameter is an allowable error of a total received power of all the terminal devices in the plurality of grids, and the second parameter is an energy-saving policy control parameter; and correspondingly, the BBL receives the received power information that is of the terminal devices in the plurality of grids in the first time period, the first parameter, and the second parameter from the BBH.

For example, the received power information that is of the terminal devices in the first time period and that is sent by the BHH to the BBL may be a total received power of all terminal devices in each of the plurality of grids in the first time period. A total received power of all terminal devices in one grid $(u, v)$ in the first time period may be represented as $P_r(u, v)$.

For example, the received power information that is of the terminal devices in the plurality of grids in the first time period and that is sent by the BHH to the BBL may be a total received power of all the terminal devices in the plurality of grids in the first time period. The total received power of all the terminal devices in the plurality of grids in the first time period may be represented as $\Sigma_{u,v} P_r(u, v)$.

The first parameter and the second parameter may be determined by an operator based on a commercial policy and indicated to the network device. A larger value of the second parameter indicates that more attention needs to be paid to experience of the terminal devices (users) in a current application scenario.

In the technical solution provided in this embodiment of this application, the BBH sends, to the BBL through the eCPRI interface, the received power information that is of the terminal devices in the first time period, the first parameter, and the second parameter, without a need to send a bitmap codebook. In this embodiment of this application, information (the received power information, the first parameter, and the second parameter) sent by the BBH to the BBL through the eCPRI interface occupies 2 words (words), and the bitmap codebook occupies 4 words. Therefore, compared with a solution of transmitting the bitmap codebook, the technical solution provided in this embodiment of this application reduces traffic over a fronthaul interface by 50%.

830: The BBL determines a switch-off policy that is for a plurality of physical antennas of the network device in a second time period based on the received power information of the terminal devices in the plurality of grids in the first time period, the first parameter, and the second parameter. The second time period is associated with the first time period, and the second time period may be understood as an energy-saving period of the network device.

For example, the first time period may be a historical time period corresponding to the second time period. For example, the first time period is 12:00 to 12:10 on the first day, and the second time period is 12:00 to 12:10 on the second day. This example is applicable to an application scenario in which a received power of a terminal device (user) exhibits regularity.

For example, the first time period and the second time period may be consecutive, and time corresponding to the first time period and time corresponding to the second time period are relatively short. For example, the first time period is 12:00 to 12:01 on a current day, and the second time period is 12:01 to 12:02 on the current day.

Optionally, the BBL determines the switch-off policy that is for the plurality of physical antennas of the network device in the second time period based on a total load power of the network device in the second time period, received power information of the terminal devices in the plurality of grids in the second time period, the received power information of the terminal devices in the plurality of grids in the first time period, the first parameter, and the second parameter.

The total load power $\overline{P_s}$ of the network device in the second time period may be represented by Formula (1):

$$\overline{P_s} = \sum_{m=0}^{M-1} \sum_{n=0}^{63} \left| x(m,n) \right|^2 \cdot l_n \qquad (1)$$

$x(m, n)$ represents a signal sent by the network device to an $m^{th}$ terminal device through an $n^{th}$ physical antenna. A quantity of physical antennas of the network device and a quantity of physical antennas of the terminal devices each are 64. $M$ represents a quantity of all the terminal devices in the plurality of grids. $l_n$ represents an off state or an on state of the $n^{th}$ physical antenna of the network device.

A total received power $\overline{P_r}(u, v)$ of all the terminal devices in the one grid $(u, v)$ in the second time period may be represented by Formula (2):

$$\overline{P_r}(u,v) = \sum_{m=0}^{M_{(u,v)}} \left| \sum_{k=0}^{63} \sum_{n=0}^{63} \left( x(m,n) \cdot l_n \right) e^{-j\frac{2p}{64}nk} \right|^2 \qquad (2)$$

$M_{(u,v)}$ represents a quantity of all the terminal devices in the grid $(u, v)$. $k$ represents indexes of different beams transmitted by the network device, and a quantity of the different beams is 64. $l_n$ represents an off state or an on state of the $n^{th}$ physical antenna of the network device.

A target function used to determine the switch-off policy that is for the plurality of physical antennas of the network device in the second time period may be constructed based on Formula (1) and Formula (2). The target function $J$ may be represented by Formula (3):

$$J = \sum_{m=0}^{M} \sum_{n=0}^{63} \left| x(m,n) \right|^2 \cdot l_n + a \cdot \left( \left| \sum_{u,v} \overline{P_r}(u,v) - \sum_{u,v} P_r(u,v) \right|^2 - e \right) \qquad (3)$$

$|\Sigma_{u,v} \overline{P_r}(u, v) - \Sigma_{u,v} P_r(u, v)|^2 \leq e$. $e$ represents the first parameter. $a$ represents the second parameter. $\Sigma_{u,v} \overline{P_r}(u, v)$

represents a total received power of all the terminal devices in the plurality of grids in the second time period. The received power information of the terminal devices in the plurality of grids in the second time period includes $\Sigma_{u,v}\overline{P_r}(u, v)$.

In the energy-saving period (the second time period), the switch-off policy for the plurality of physical antennas of the network device is $I_n$ corresponding to a minimum value of the target function $J$. In other words, the switch-off policy for the plurality of physical antennas of the network device is off states or on states that are of the plurality of physical antennas and that correspond to the minimum value of the target function $J$.

The BBL switches off or on, in the second time period, the plurality of physical antennas of the network device according to the determined switch-off policy for the plurality of physical antennas. For example, a physical antenna switch-off computing module in the BBL determines the switch-off policy that is for the plurality of physical antennas of the network device in the second time period based on the received power information of the terminal devices in the plurality of grids in the first time period, the first parameter, and the second parameter. The BBL sends the determined switch-off policy for the plurality of physical antennas to a radio frequency module of the network device, and the radio frequency module enables the switch-off policy to take effect in the second time period. The radio frequency module is deployed in an AUU and is a module independent of the BBL.

In the technical solution provided in this embodiment of this application, the BBH determines the switch-off policy that is for the plurality of physical antennas of the network device in the second time period based on the received power information of the terminal devices in the plurality of grids in the first time period, the first parameter, and the second parameter, so that the off states or the on states of the plurality of physical antennas of the network device can be dynamically adjusted. Compared with a solution of static channel shutdown, the technical solution in this embodiment of this application can improve energy-saving effect of the network device while ensuring experience of the terminal devices (users) and avoiding a coverage loss of the network device. Compared with a solution of dynamic channel shutdown, the technical solution in this embodiment of this application can improve channel shutdown accuracy, so that the energy-saving effect of the network device can be improved while the experience of the terminal devices (users) is ensured. In addition, compared with the solution of transmitting the bitmap codebook, the technical solution provided in this embodiment of this application reduces the traffic over the fronthaul interface by 50%.

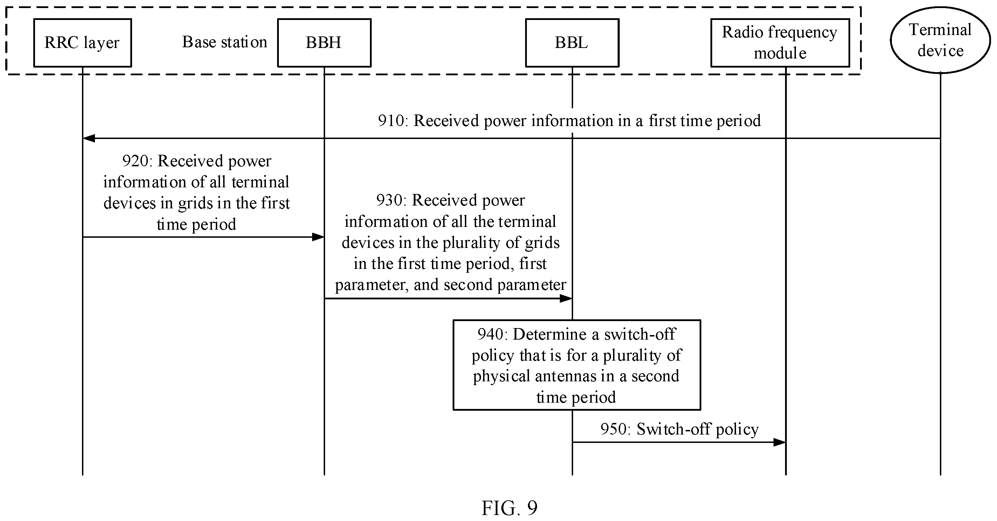

The following describes the method for switching off the physical antenna in this embodiment of this application with reference to a specific example. In this example, a network device is a base station, and the base station includes an RRC layer, a BBH, a BBL, and a radio frequency module. FIG. 9 is a schematic interaction flowchart of an example of a method for switching off a physical antenna according to an embodiment of this application. Specific steps are as follows.

910: A terminal device sends received power information that is in a first time period to the RRC layer of the base station, where the first time period may be understood as a collection period of the received power information; and correspondingly, the RRC layer of the base station receives the received power information that is in the first time period from the terminal device. It should be understood that a plurality of grids are included within coverage of the base station, and the plurality of grids are obtained through division based on geographical locations of different terminal devices. All the terminal devices in the plurality of grids separately send received power information that is in the first time period to the RRC layer of the base station.

920: The RRC layer of the base station sends the received power information that is of all the terminal devices in the plurality of grids in the first time period to the BBH of the base station, and correspondingly, the BBH receives the received power information that is of all the terminal devices in the plurality of grids in the first time period from the RRC layer.

930: The BBH of the base station sends, to the BBL of the base station through an eCPRI interface, the received power information that is of all the terminal devices in the plurality of grids in the first time period, a first parameter, and a second parameter, where the first parameter is an allowable error of a total received power of all the terminal devices in the plurality of grids, and the second parameter is an energy-saving policy control parameter; and correspondingly, the BBL receives the received power information that is of all the terminal devices in the plurality of grids in the first time period, the first parameter, and the second parameter from the BBH.

940: The BBL of the base station determines a switch-off policy that is for a plurality of physical antennas of the base station in a second time period based on the received power information of all the terminal devices in the plurality of grids in the first time period, the first parameter, and the second parameter. The second time period may be understood as an energy-saving period of the base station. Specifically, a physical antenna switch-off computing module in the BBL determines the switch-off policy that is for the plurality of physical antennas of the base station in the second time period based on the received power information of all the terminal devices in the plurality of grids in the first time period, the first parameter, and the second parameter.

Optionally, the BBL determines the switch-off policy that is for the plurality of physical antennas of the base station in the second time period based on a total load power $\overline{P_s}$ of the base station in the second time period, a received power $\Sigma_{u,v}\overline{P_r}(u, v)$ of all the terminal devices in the plurality of grids in the second time period, received powers $P_r(u, v)$ of the terminal devices in the plurality of grids in the first time period, the first parameter $e$, and the second parameter $a$. Specifically, the BBL determines, as the switch-off policy for the plurality of physical antennas of the base station, off states or on states that are of the plurality of physical antennas and that correspond to a minimum value of the objective function $J$ in Formula (3).

950: The BBL of the base station sends the determined switch-off policy for the plurality of physical antennas to a radio frequency module of the base station, and the radio frequency module enables the switch-off policy to take effect in the second time period.

The foregoing describes the method for switching off the physical antenna provided in embodiments of this application. The following describes an entity for performing the method for switching off the physical antenna.

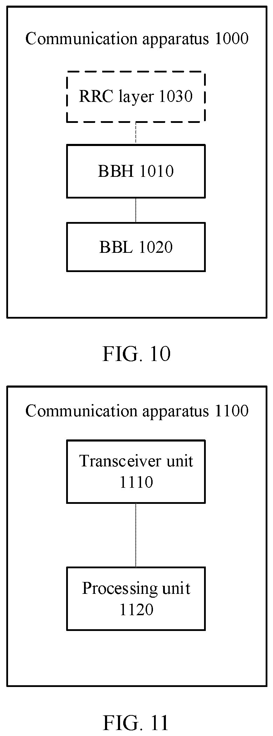

FIG. 10 is a block diagram of a communication apparatus 1000 according to an embodiment of this application. The apparatus may be used in or deployed in the network device in the method embodiments of this application. The apparatus communicates with terminal devices within coverage of the apparatus. The communication apparatus 1000 includes a BBH 1010 and a BBL 1020.

The BBH 1010 is configured to obtain received power information that is of terminal devices in a plurality of grids in a first time period, where the plurality of grids are included within the coverage of the apparatus.

The BBH 1010 is further configured to send, to the BBL 1020 through an enhanced common public radio interface eCPRI, the received power information that is of the terminal devices in the plurality of grids in the first time period, a first parameter, and a second parameter, where the first parameter is an allowable error of a total received power of all the terminal devices in the plurality of grids, and the second parameter is an energy-saving policy control parameter.

The BBL 1020 is configured to determine a switch-off policy that is for a plurality of physical antennas of the apparatus in a second time period based on the received power information of the terminal devices in the plurality of grids in the first time period, the first parameter, and the second parameter.

Optionally, the apparatus further includes an RRC layer 1030.

The RRC layer 1030 is configured to receive the received power information that is in the first time period from the terminal devices.

The RRC layer 1030 is further configured to send the received power information that is of the terminal devices in the first time period to the BBH 1010.

The BBH 1010 is specifically configured to receive the received power information that is of the terminal devices in the first time period from the RRC layer 1030.

Optionally, the BBL 1020 is specifically configured to determine the switch-off policy that is for the plurality of physical antennas of the apparatus in the second time period based on a total load power of the apparatus in the second time period, received power information of the terminal devices in the plurality of grids in the second time period, the received power information of the terminal devices in the plurality of grids in the first time period, the first parameter, and the second parameter.

Optionally, the BBL 1020 is further configured to switch off or on, in the second time period, the plurality of physical antennas of the apparatus according to the switch-off policy.

FIG. 11 is a block diagram of another communication apparatus 1100 according to an embodiment of this application. The apparatus may be used in or deployed in the network device in the method embodiments of this application. The apparatus communicates with terminal devices within coverage of the apparatus. The communication apparatus 1100 includes the following units.

A transceiver unit 1110 is configured to obtain received power information that is of terminal devices in a plurality of grids in a first time period, where the plurality of grids are included within the coverage of the apparatus.

A processing unit 1120 is configured to determine a switch-off policy that is for a plurality of physical antennas of the apparatus in a second time period based on the received power information of the terminal devices in the plurality of grids in the first time period, the first parameter, and the second parameter, where the first parameter is an allowable error of a total received power of all the terminal devices in the plurality of grids, and the second parameter is an energy-saving policy control parameter.

Optionally, the transceiver unit 1110 is specifically configured to receive the received power information that is of the terminal devices in the first time period.

Optionally, the processing unit 1120 is specifically configured to determine the switch-off policy that is for the plurality of physical antennas of the apparatus in the second time period based on a total load power of the apparatus in the second time period, received power information of the terminal devices in the plurality of grids in the second time period, the received power information of the terminal devices in the plurality of grids in the first time period, the first parameter, and the second parameter.

Optionally, the processing unit 1120 is further configured to switch off or on, in the second time period, the plurality of physical antennas of the apparatus according to the switch-off policy.

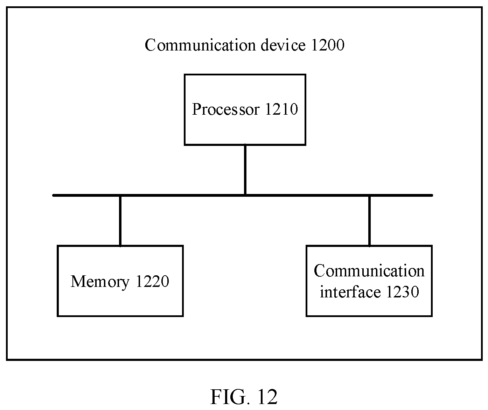

FIG. 12 is a block diagram of another communication device 1200 according to an embodiment of this application. The communication device 1200 includes a processor 1210, a memory 1220, and a communication interface 1230.

The memory 1220 is configured to store a computer program.

The processor 1210 is coupled to the memory 1220 through the communication interface 1230, and the processor 1210 is configured to invoke and run the computer program in the memory 1220, to implement the method in embodiments of this application. The communication apparatus may be used in the first terminal in embodiments of this application. Optionally, the processor 1210 and the memory 1220 are integrated together.

The processor 1210 may be an integrated circuit chip, and has a signal processing capability. In an implementation process, steps in the foregoing method embodiments may be completed by using a hardware integrated logic circuit in the processor, or by using instructions in a form of software. The processor may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

Optionally, an embodiment of this application further provides a communication device. The communication device includes an input/output interface and a logic circuit. The input/output interface is configured to obtain input information and/or output information. The logic circuit is configured to: perform the method in any one of the method embodiments, and perform processing and/or generate output information based on the input information.

An embodiment of this application provides a communication system, including the network device and the terminal devices in the method for switching off the physical antenna in embodiments of this application.

An embodiment of this application further provides a computer-readable storage medium. The computer-readable storage medium stores a computer program for implementing the method in the foregoing method embodiments. When the computer program is run on a computer or a processor, the computer or the processor is enabled to implement the method in the foregoing method embodiments.

An embodiment of this application further provides a computer program product. The computer program product includes a computer program. When the computer program is run on a computer, the method in the foregoing method embodiments is implemented.

An embodiment of this application further provides a chip, including a processor. The processor is connected to a memory. The memory is configured to store a computer program, and the processor is configured to execute the computer program stored in the memory, to enable the chip to perform the method in the foregoing method embodiments.

It should be understood that, in embodiments of this application, numbers "first", "second", and the like are merely used to distinguish between different objects, for example, to distinguish between different time periods, and do not constitute a limitation on the scope of embodiments of this application. Embodiments of this application are not limited thereto.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification usually represents an "or" relationship between associated objects. In this application, the term "at least one" may represent "one" and "two or more". For example, at least one of A, B, and C may represent the following seventh cases: Only A exists, only B exists, only C exists, both A and B exist, both A and C exist, and both C and B exist, and A, B, C all exist.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application, but such implementation should not be considered beyond the scope of this application.

It may be clearly understood by the person skilled in the art that, for the purpose of convenient and brief description, for detailed working processes of the foregoing systems, apparatuses, and units, refer to corresponding processes in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by the person skilled in the art within the technical scope disclosed in this application shall fall within the protection scope of this application. Therefore, the protection scope of this application shall be subject to the protection scope of the claims.

**Claims**

1. A method for switching off a physical antenna, wherein a network device comprises a baseband higher BBH and a baseband lower BBL, and the method comprises:

   obtaining, by the BBH, received power information that is of terminal devices in a plurality of grids in a first time period, wherein the plurality of grids are comprised within coverage of the network device;
   sending, by the BBH to the BBL through an enhanced common public radio interface eCPRI, the received power information that is of the terminal devices in the plurality of grids in the first time period, a first parameter, and a second parameter, wherein the first parameter is an allowable error of a total received power of all the terminal devices in the plurality of grids, and the second parameter is an energy-saving policy control parameter; and
   determining, by the BBL, a switch-off policy that is for a plurality of physical antennas of the network device in a second time period based on the received power information of the terminal devices in the plurality of grids in the first time period, the first parameter, and the second parameter.

2. The method according to claim 1, wherein obtaining, by the BBH, the received power information that is of the terminal devices in the plurality of grids in the first time period comprises:

   receiving, by a radio resource control RRC layer, the received power information that is in the first time period from the terminal devices, wherein the network device comprises the RRC layer;
   sending, by the RRC layer, the received power information that is of the terminal devices in the first time period to the BBH; and
   receiving, by the BBH, the received power information that is of the terminal devices in the first time period from the RRC layer.

3. The method according to claim 1 or 2, wherein determining, by the BBL, the switch-off policy that is for the plurality of physical antennas of the network device in the second time period based on the received power information of the terminal devices in the plurality of grids in the first time period, the first parameter, and the second parameter comprises:
   determining, by the BBL, the switch-off policy that is for the plurality of physical antennas of the network device in the second time period based on a total load power of the network device in the second time period, received power information of the terminal devices in the plurality of grids in the second time period, the received power information of the terminal devices in the plurality of grids in the first time period, the first parameter, and the second parameter.

4. The method according to any one of claims 1 to 3, wherein the method further comprises:

switching off or on, by the BBL in the second time period, the plurality of physical antennas of the network device according to the switch-off policy.

5. A communication apparatus, wherein the apparatus comprises a baseband higher BBH and a baseband lower BBL;

the BBH is configured to obtain received power information that is of terminal devices in a plurality of grids in a first time period, wherein the plurality of grids are comprised within coverage of the apparatus;
the BBH is further configured to send, to the BBL through an enhanced common public radio interface eCPRI, the received power information that is of the terminal devices in the plurality of grids in the first time period, a first parameter, and a second parameter, wherein the first parameter is an allowable error of a total received power of all the terminal devices in the plurality of grids, and the second parameter is an energy-saving policy control parameter; and
the BBL is configured to determine a switch-off policy that is for a plurality of physical antennas of the apparatus in a second time period based on the received power information of the terminal devices in the plurality of grids in the first time period, the first parameter, and the second parameter.

6. The apparatus according to claim 5, wherein the apparatus further comprises a radio resource control RRC layer;

the RRC layer is configured to receive the received power information that is in the first time period from the terminal devices;
the RRC layer is further configured to send the received power information that is of the terminal devices in the first time period to the BBH; and
the BBH is specifically configured to receive the received power information that is of the terminal devices in the first time period from the RRC layer.

7. The apparatus according to claim 5 or 6, wherein
the BBL is specifically configured to determine the switch-off policy that is for the plurality of physical antennas of the apparatus in the second time period based on a total load power of the apparatus in the second time period, received power information of the terminal devices in the plurality of grids in the second time period, the received power information of the terminal devices in the plurality of grids in the first time period, the first parameter, and the second parameter.

8. The apparatus according to any one of claims 5 to 7, wherein
the BBL is further configured to switch off or on, in the second time period, the plurality of physical antennas of the apparatus according to the switch-off policy.

9. A communication apparatus, comprising:

a transceiver unit, configured to obtain received power information that is of terminal devices in a plurality of grids in a first time period, wherein the plurality of grids are comprised within coverage of the apparatus; and
a processing unit, configured to determine a switch-off policy that is for a plurality of physical antennas of the apparatus in a second time period based on the received power information of the terminal devices in the plurality of grids in the first time period, the first parameter, and the second parameter, wherein the first parameter is an allowable error of a total received power of all the terminal devices in the plurality of grids, and the second parameter is an energy-saving policy control parameter.

10. The apparatus according to claim 9, wherein
the transceiver unit is specifically configured to receive the received power information that is of the terminal devices in the first time period.

11. The apparatus according to claim 9 or 10, wherein
the processing unit is specifically configured to determine the switch-off policy that is for the plurality of physical antennas of the apparatus in the second time period based on a total load power of the apparatus in the second time period, received power information of the terminal devices in the plurality of grids in the second time period, the received power information of the terminal devices in the plurality of grids in the first time period, the first parameter, and the second parameter.

12. The apparatus according to any one of claims 9 to 11, wherein

the processing unit is further configured to switch off or on, in the second time period, the plurality of physical antennas of the apparatus according to the switch-off policy.

13. A communication device, comprising a processor and a memory, wherein the memory is configured to store a computer program, and the processor is configured to execute the computer program stored in the memory, to enable the communication apparatus to perform the method according to any one of claims 1 to 4.

14. A computer-readable storage medium, wherein

the computer-readable medium stores a computer program; and
when the computer program is run on a computer or a processor, the computer or the processor is enabled to perform the method according to any one of claims 1 to 4.

15. A computer program product, comprising a computer program, wherein when the computer program is executed by a computer, the method according to any one of claims 1 to 4 is implemented.

FIG. 1

FIG. 2

Fronthaul interface

| Initiate energy saving | — | Deliver an energy-saving mode | → | Implement energy saving |

BBU

AAU

FIG. 3

● Channel off state

○ Channel on state

FIG. 4

◉ Channel off state

◯ Channel on state

FIG. 5

Fronthaul interface

| Initiate energy saving | Bitmap codebook | Implement energy saving |

BBU

AAU

FIG. 6

⬤ Channel off state

◯ Channel on state

FIG. 7

800

| A BBH obtains received power information that is of terminal devices in a plurality of grids in a first time period, where the plurality of grids are included within coverage of a network device | 810 |

| The BBH sends, to a BBL through an eCPRI, the received power information that is of the terminal devices in the plurality of grids in the first time period, a first parameter, and a second parameter, where the first parameter is an allowable error of a total received power of all the terminal devices in the plurality of grids, and the second parameter is an energy-saving policy control parameter | 820 |

| The BBL determines a switch-off policy that is for a plurality of physical antennas of the network device in a second time period based on the received power information of the terminal devices in the plurality of grids in the first time period, the first parameter, and the second parameter | 830 |

FIG. 8

FIG. 9

Communication apparatus 1000

RRC layer 1030

BBH 1010

BBL 1020

FIG. 10

Communication apparatus 1100

Transceiver unit 1110

Processing unit 1120

FIG. 11

Communication device 1200

Processor 1210

Memory 1220

Communication interface 1230

FIG. 12

## INTERNATIONAL SEARCH REPORT

| International application No. |
|---|
| **PCT/CN2023/071502** |

| A. | CLASSIFICATION OF SUBJECT MATTER |
|---|---|

H04W52/02(2009.01)i;  H01Q25/04(2006.01)i

According to International Patent Classification (IPC) or to both national classification and IPC

| B. | FIELDS SEARCHED |
|---|---|

Minimum documentation searched (classification system followed by classification symbols)

IPC:H04W,H01Q

Documentation searched other than minimum documentation to the extent that such documents are included in the fields searched

Electronic data base consulted during the international search (name of data base and, where practicable, search terms used)

CNTXT, ENTXTC, DWPI, CNKI, 3GPP: 天线, 通道, 关断, 关闭, 打开, 开启, 禁用, 使能, 功率, 动态, 节能, 策略, 栅格, 误差, antenna, channel, BBH, BBL, AAU, switch+, off, on, enable, saving, power, RSRP, dynamic, policy, error, RRC

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 113453189 A (RESEARCH INSTITUTE OF CHINA MOBILE COMMUNICATIONS CORP. et al.) 28 September 2021 (2021-09-28) claims 1-12 and 19 | 1-15 |
| A | CN 110890632 A (HUAWEI TECHNOLOGIES CO., LTD.) 17 March 2020 (2020-03-17) entire document | 1-15 |
| A | CN 112702766 A (DATANG MOBILE COMMUNICATIONS EQUIPMENT CO., LTD.) 23 April 2021 (2021-04-23) entire document | 1-15 |
| A | CN 113453323 A (DATANG MOBILE COMMUNICATIONS EQUIPMENT CO., LTD.) 28 September 2021 (2021-09-28) entire document | 1-15 |
| A | WO 2014059665 A1 (QUALCOMM INC.) 24 April 2014 (2014-04-24) entire document | 1-15 |
| A | ZTE et al. "TP to TR25.927: Dynamic Switch On/Off Secondary Antenna in MIMO System" *3GPP TSG RAN WG1 Meeting #61, R1-103356*, 14 May 2010 (2010-05-14), entire document | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 September 2023** | **11 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/071502** |

| Patent document<br>cited in search report | | | Publication date<br>(day/month/year) | Patent family member(s) | | | Publication date<br>(day/month/year) |
| --- | --- | --- | --- | --- | --- | --- | --- |
| CN | 113453189 | A | 28 September 2021 | None | | | |
| CN | 110890632 | A | 17 March 2020 | US | 2023088956 | A1 | 23 March 2023 |
| | | | | US | 2021203395 | A1 | 01 July 2021 |
| | | | | EP | 3840452 | A1 | 23 June 2021 |
| | | | | WO | 2020052691 | A1 | 19 March 2020 |
| | | | | KR | 20210053965 | A | 12 May 2021 |
| | | | | IN | 202117010995 | A | 07 May 2021 |
| CN | 112702766 | A | 23 April 2021 | None | | | |
| CN | 113453323 | A | 28 September 2021 | None | | | |
| WO | 2014059665 | A1 | 24 April 2014 | None | | | |

Form PCT/ISA/210 (patent family annex) (July 2022)